# FASCICULE DE BREVET EUROPEEN

(11) **EP 0 516 568 B1**
(45) Date de publication et mention de la délivrance du brevet: **20.03.1996**
(21) Numéro de dépôt: 92420180.9
(22) Date de dépôt: 27.05.1992
(51) Int. Cl.: A47J 47/14, A47J 39/02, F25D 3/08

(54) **Conditionnement calorifugé pour le transport réfrigéré ou chaud de récipients contenant des produits alimentaires**
Wärmeisolierender Konditionierer für den gekühlten oder erwärmten Transport von Behältern mit Nahrungsmitteln
Heat-insulated conditioner for the cooled or heated transport of receptacles containing foodstuffs

(30) Priorité: 29.05.1991 FR 9106683
(43) Date de publication de la demande: 02.12.1992
(73) Titulaire: Pralus, Georges, F-42720 Pouilly sous Charlieu (FR)
(72) Inventeur: Pralus, Georges, F-42720 Pouilly sous Charlieu (FR)
(74) Mandataire: Thibault, Jean-Marc

(56) Documents cités:
- DE-A- 2 755 627
- DE-C- 653 615
- FR-A- 1 031 395
- US-A- 3 482 078
- US-A- 4 052 589
- US-A- 4 904 848

## Description

La présente invention concerne le domaine technique des emballages ou des conditionnements calorifugés conçus pour assurer le transport de récipients au sens général, tels que des assiettes, des plats ou des bols destinés à contenir des produits ou des denrées alimentaires de nature diverse.

L'état de la technique a déjà proposé divers conditionnements calorifugés pour le transport des denrées alimentaires. A cet effet, il est bien connu d'utiliser une glacière qui se présente sous la forme d'un caisson hermétiquement clos, tapissé de matière isolante et destiné à recevoir de la glace pour maintenir, dans le volume interne du caisson, une basse température favorable à la conservation des produits alimentaires.

Un perfectionnement à ce type de conditionnement est apporté par le brevet **US-A-4 904 848** proposant une valise de transport de produits alimentaires placés dans des boîtes hermétiquement fermées et destinées à être supportées par une platine aménagée à l'intérieur de la valise. La valise est divisée en compartiments pour recevoir un élément de refroidissement et un élément de chauffage des boîtes.

Il est connu également, par le brevet **US-A-4 052 589**, un conditionnement pour le transport de produits alimentaires placés directement sur des plateaux calorifugés amovibles montés de manière superposée entre un couvercle et un fond et maintenus entre eux à l'aide de moyens d'assemblage, de manière à constituer un caisson calorifugé fermé. L'intérieur du caisson communique avec une source de production d'un fluide froid ou chaud.

Les conditionnements connus ne donnent pas satisfaction dans de nombreuses utilisations pratiques, comme celles relatives, notamment, au transport de produits alimentaires se présentant sous la forme d'assiettes ou de plats dressés de produits alimentaires prêts à la dégustation. En effet, les conditionnements connus ne sont pas conçus pour maintenir en position stable, pendant le transport, les récipients contenant ces denrées, de sorte que ces dernières ne sont pas intactes au terme de leur transport. L'usage de ce genre de conditionnement conduit à constater qu'il est réservé, de préférence, au transport de denrées alimentaires placées, au préalable, dans des boîtes hermétiquement closes, ce qui impose de procéder, généralement, à une reprise des denrées alimentaires pour les disposer sur un récipient, en vue de leur consommation.

Les conditionnements connus ne permettent donc pas d'assurer le transport, sans dommages de ces plats cuisinés décorés, entre le lieu de fabrication ou de réalisation et le lieu de dégustation.

Il apparaît donc le besoin de pouvoir disposer d'un conditionnement calorifugé conçu pour permettre de protéger des récipients dressés de produits alimentaires prêts à la consommation, de manière à conserver intactes les denrées alimentaires lors de leur transport, tout en offrant la possibilité de placer directement les récipients contenant les denrées à une température froide ou chaude ou successivement froide et chaude.

Pour atteindre cet objectif, le conditionnement pour le transport d'au moins un récipient contenant des produits alimentaires, est du type comportant :
- un fond et un couvercle,
- une série de plateaux calorifugés amovibles, montés de manière superposée, entre le couvercle et le fond, et maintenus entre eux à l'aide de moyens d'assemblage, de manière à constituer un caisson calorifugé fermé,
- et au moins une source de production d'un fluide froid ou chaud, communiquant avec l'intérieur du caisson.

Selon l'invention, les plateaux calorifugés sont équipés chacun de moyens de support et de cent rage pour au moins un récipient, formés par au moins une alvéole délimitant une enceinte et s'ouvrant sur les deux faces principales du plateau pour communiquer avec le ou les enceintes du ou des plateaux voisins, de façon à permettre la circulation du fluide.

Avantageusement, le conditionnement est constitué par une série de plateaux amovibles montés de manière superposée et maintenus entre eux à l'aide de moyens d'assemblage. Un tel conditionnement assure le transport dans des conditions stables d'une série de récipients dont le nombre est adapté à volonté en fonction de la capacité de transport souhaitée.

Selon une autre forme avantageuse de réalisation de l'invention, chaque plateau comporte au moins un orifice communiquant avec l'enceinte correspondante et débouchant sur les deux faces principales du plateau, les orifices des plateaux étant alignés en position de superposition des plateaux, de manière à constituer un canal destiné à communiquer avec la source de production de chaud ou de froid, positionnée à l'extérieur du conditionnement ou rapportée dans le canal.

De préférence, le canal est apte à recevoir une cartouche de production d'un fluide froid et/ou chaud, raccordé à une tension électrique.

L'objet de la présente invention trouve une application particulièrement avantageuse pour le transport d'assiettes ou de plats dressés de produits alimentaires à caractère frais ou congelé et dont la confection revient à un traiteur, un restaurateur ou à un cuisinier travaillant de manière artisanale, semi-industrielle ou industrielle.

Diverses autres caractéristiques ressortent de la description faite ci-dessous en référence aux dessins annexés qui montrent, à titre d'exemples non limitatifs, des formes de réalisation de l'objet de l'invention.

La **fig. 1** est une vue en perspective montrant un conditionnement conforme à l'invention.

La **fig. 2** est une vue en coupe prise sensiblement selon la ligne II-II de la **fig. 1.**

La **fig. 3** est une vue en perspective en arraché montrant un exemple de réalisation d'un plateau constitutif du conditionnement selon l'invention.

La **fig. 4** est une vue de dessus montrant un autre exemple de réalisation d'un plateau constitutif du conditionnement selon l'invention.

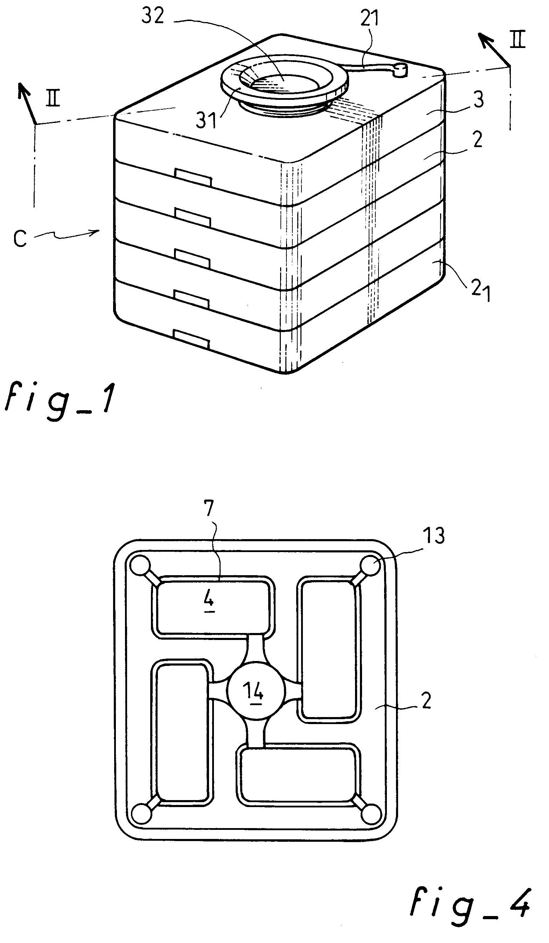

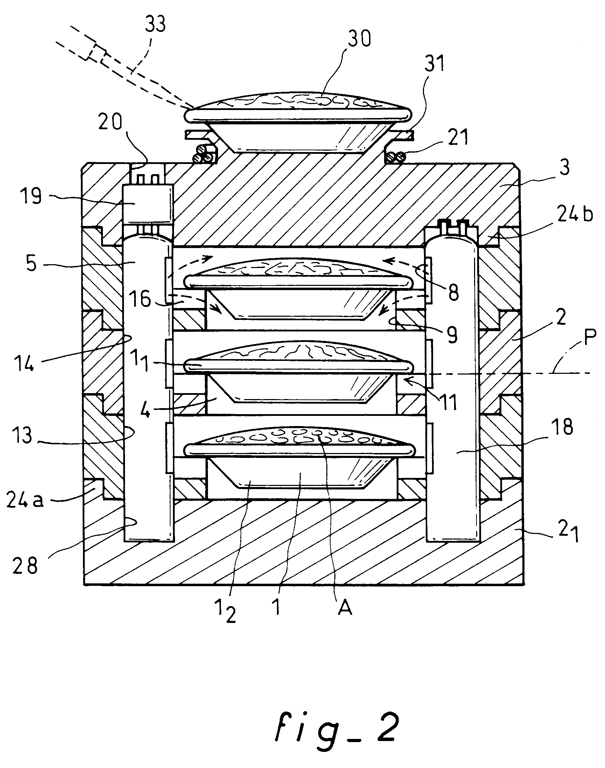

Tel que cela apparaît plus précisément aux **fig. 1** et **2**, le conditionnement selon l'invention est adapté pour le transport d'au moins un récipient **1**, tel que par exemple un bol, un plat ou dans l'exemple illustré une assiette, contenant des produits alimentaires **A** au sens général. Le conditionnement selon l'invention est constitué par au moins un, et dans l'exemple illustré par quatre plateaux superposés **2**, réalisés chacun en un matériau isolant thermiquement, tel que par exemple du polystyrène. Les plateaux **2** forment ainsi un caisson calorifugé **C** dont le plateau inférieur **2₁** constitue le fond. Un tel caisson est fermé hermétiquement par l'intermédiaire d'un couvercle **3** réalisé également en un matériau isolant thermiquement, identique ou non à celui constitutif des plateaux **2**.

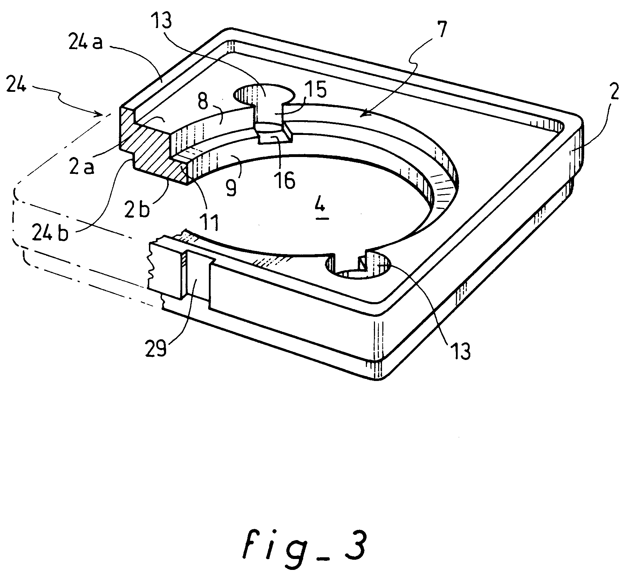

Tel que cela apparaît plus précisément aux **fig. 2** et **3**, chaque plateau **2** est amovible et constitue un plateau de centrage et de support pour au moins un récipient **1**. Chaque plateau **2** délimite, autour du récipient ainsi positionné, une chambre, un volume ou une enceinte **4** communiquant avec une source **5** de production d'un fluide froid ou chaud. Chaque plateau **2** est aménagé pour présenter des moyens assurant une fonction de positionnement, de support et de centrage du récipient **1**, réalisés avantageusement mais non exclusivement par une conformation ou une alvéole **7** ménagée dans le plateau. De préférence, chaque alvéole **7** s'ouvre sur les deux faces principales opposées **2a**, **2b** du plateau permettant, ainsi, la communication de l'enceinte **4** délimitée par l'alvéole, avec la ou les enceintes **4** formées par les alvéoles des plateaux adjacents. Dans l'exemple illustré, chaque alvéole **7** est formée par une percée **8** s'ouvrant sur la face supérieure **2a** du plateau et prolongée par une ouverture **9** s'ouvrant sur la face inférieure **2b** du plateau. La percée **8** possède une section de passage transversale supérieure à celle de l'ouverture **9**, de manière à délimiter entre elles, un épaulement **11** sur lequel repose le bord **1₁** du récipient **1**.

Bien entendu, la section de passage de la percée **8** est supérieure à la section maximale présentée par l'assiette, tandis que l'ouverture **9** possède une section de passage supérieure à celle du fond **1₂** du récipient **1**, de manière qu'en position de maintien stable, le bord **1₁** et le fond **1₂** du récipient s'établissent respectivement au niveau de la percée **8** et de l'ouverture **9**. En conséquence, la hauteur de chaque plateau **2** est choisie de manière à être supérieure à la hauteur du récipient, additionnée éventuellement de la hauteur des denrées alimentaires dépassant ou s'élevant à partir du bord du récipient **1**, afin de permettre la superposition des plateaux en conservant intactes les denrées alimentaires. Par ailleurs, chaque alvéole **7** présente un contour adapté et, de préférence, complémentaire avec celui du récipient **1** qu'elle doit supporter. Ainsi, l'alvéole peut être de forme circulaire, ovale ou polygonale. De plus, l'alvéole peut présenter un profil adapté au récipient à positionner. A titre d'exemple, l'alvéole peut être délimitée par un profil en tronc de cône dont la plus petite base s'ouvre vers la face inférieure du plateau, de manière à supporter par exemple un bol.

Il doit être considéré que chaque alvéole **7** peut être ménagée, soit directement dans le plateau **2**, soit dans une plaque rapportée sur le plateau. Cette dernière possibilité offre l'avantage de pouvoir disposer, en changeant uniquement de plaques, d'une large gamme de profils d'alvéoles adaptés aux diverses formes susceptibles d'être présentées par les récipients **1**. Il peut être prévu, également, de rapporter ce type de plaques sur l'alvéole ménagée initialement sur le plateau.

Avantageusement, chaque plateau **2** comporte au moins un et, dans l'exemple illustré, deux orifices **13** communiquant avec l'enceinte **4** et débouchant sur les deux faces principales **2a**, **2b** du plateau. Pour chaque plateau, les deux orifices **13** sont ménagés, de préférence, selon deux coins opposés. En position de superposition des plateaux **2**, les orifices **13** se trouvent alignés, de manière à constituer, comme illustré à la **fig. 2**, un canal **14** formant avec les enceintes **4** des plateaux, un circuit de circulation du fluide.

Chaque orifice **13** d'un plateau communique avec l'enceinte **4** correspondante, à l'aide d'au moins un passage **15** débouchant en dessus et en dessous d'un plan **P** de support du récipient **1** qui passe, dans l'exemple illustré, au niveau de l'épaulement **11**. Pour assurer une communication entre l'orifice **13** et la partie de l'enceinte **4**, placée en dessous du récipient **1**, chaque orifice **13** est prolongé par l'intermédiaire d'un dégagement **16**, ménagé au niveau de l'ouverture **9**. Les deux canaux **14** communiquent chacun avec les enceintes **4** qui communiquent, également, entre elles, de manière à former un circuit pour la circulation d'un fluide froid ou chaud. Un tel fluide est amené, à l'aide de la source **5**, au niveau des canaux **14** qui communiquent aux enceintes, par l'intermédiaire des passages **15**. Dans l'exemple illustré, la source **5** est constituée par des cartouches **18** prenant place chacune à l'intérieur d'un canal **14**. Chaque cartouche **18** est apte à produire un fluide froid et peut être constitué, à cet égard, par une cartouche cryogénique, à chaux vive, à l'eau glacée, etc.

Avantageusement, il peut être utilisé une cartouche **18** adaptée, également, pour produire un fluide chaud apte à monter en température les produits alimentaires contenus dans les récipients **1**. A titre d'exemple, il peut être prévu d'utiliser une cartouche **18** comportant une capacité d'eau glacée associée à un capillaire. Cette cartouche est raccordée par l'intermédiaire d'un connecteur **19** à une tension électrique, de manière à obtenir une vaporisation de l'eau. Le connecteur **19** est, avantageusement, monté à l'intérieur d'un orifice débouchant **20** réalisé dans le couvercle pour s'étendre en alignement avec au moins un canal **14**. Le connecteur **19** est raccordé à une tension électrique par l'intermédiaire d'un cordon **21** (**Fig. 1**).

Bien entendu, il peut être prévu de mettre en oeuvre d'autres sources de production d'un fluide froid ou chaud montées à l'intérieur ou à l'extérieur du conditionnement. Ainsi, dans une forme de réalisation non représentée, le connecteur **19** peut être remplacé, par exemple, par un capuchon accessible de l'extérieur du couvercle pour permettre l'introduction d'un fluide froid ou chaud fourni par une source appropriée délivrant respectivement un produit cryogénique non nocif (azote ou C0₂) ou un fluide calorifique. Le fluide produit par la source chaude ou froide est amené à circuler à partir des orifices **13**, dans les enceintes **4**, à savoir en dessous et au dessus du récipient, de manière respectivement à refroidir ou à réchauffer les produits alimentaires contenus dans les récipients **1**. Il est à noter que le flux circulant au-dessus d'un récipient **1** permet de refroidir ou de réchauffer le fond du récipient supérieur et inversement. Le circuit de circulation du fluide ainsi créé à l'intérieur du conditionnement permet aux récipients **1** et aux denrées **A** d'être complètement baignés extérieurement dans le fluide, de sorte qu'il peut être obtenu un refroidissement ou un chauffage à coeur des produits alimentaires.

Le conditionnement selon l'invention permet ainsi le transport de récipients dressés de produits alimentaires, à une température favorable à la conservation des denrées et permet, le moment venu, de procéder au réchauffement des plats si nécessaire, sans nécessité de manipulations particulières. Les récipients sont alors retirés de leur plateau pour permettre la consommation des denrées alimentaires prêtes à la dégustation.

Avantageusement, le conditionnement selon l'invention peut être constitué par une série de plateaux **2** superposés qui sont maintenus entre eux à l'aide de moyens d'assemblage **24**. De préférence mais non exclusivement, ces moyens d'assemblage **24** sont du type à emboîtement, ménagés sur les faces principales **2a, 2b** du plateau. A titre d'exemple, la face **2a** de chaque plateau comporte une languette périphérique **24a**, tandis que la face inférieure **2b** du plateau est pourvue d'une rainure périphérique complémentaire **24b**. La languette **24a** d'un plateau est destinée à coopérer avec la rainure **24b** d'un plateau supérieur. Bien entendu, le couvercle **3** est également pourvu d'une rainure **24b**, tandis que le fond **2₁** est équipé d'une languette **24a**.

Le conditionnement selon l'invention est constitué simplement en procédant à la superposition du fond **2₁**, d'au moins un plateau **2** et du couvercle **3**. Ces éléments constitutifs, qui sont réalisés en un matériau thermiquement isolant, forment ainsi un caisson calorifugé compact facilement transportable. De préférence, le fond **2₁** comporte un trou borgne **28**, ménagé pour être aligné avec chaque orifice **13** du plateau supérieur, en vue de recevoir une cartouche **18** et assurer une liaison entre les plateaux **2** et le fond **2₁**. Pour augmenter la tenue mécanique du conditionnement ainsi formé, il peut être prévu d'envelopper l'ensemble d'une housse rétractable dont le retrait est facilité par la réalisation d'une rainure de découpe verticale **29** ménagée sur le chant des plateaux. Bien entendu, bien que cela ne soit pas représenté, il peut être prévu de ménager, également, dans le plateau de fond **2₁**, une alvéole **7** de cent rage et de support d'un récipient **1**.

Tel que cela apparaît plus précisément à la **fig. 2**, le conditionnement selon l'invention est particulièrement adapté pour tenir au froid et réchauffer des récipients **1** contenant des produits alimentaires congelés recouverts par un film de protection **30**. Pour permettre un retrait aisé de ce film de protection, le couvercle **3** est avantageusement équipé, sur sa face supérieure, d'une platine de détourage **31** dans laquelle est ménagée une cavité **32** de réception du fond du récipient permettant de positionner et de supporter le récipient lors de l'enlèvement du film à l'aide, par exemple, d'une lame coupante **33** représentée en pointillés sur la figure **2**. De préférence mais non exclusivement, la platine **32** s'étend à distance de la surface du couvercle, de manière à ménager un espace pour la réception du cordon de raccordement **21**.

La **fig. 4** illustre une forme de réalisation d'un plateau **2** conçu pour maintenir plusieurs récipients **1**. A titre d'exemple, le plateau **2** comporte quatre alvéoles de centrage **7** communiquant chacune avec un orifice **13** et avec un canal central **14** dans lequel est introduit un fluide par tous moyens appropriés décrits ci-dessus.

## Revendications

1. Conditionnement pour le transport d'au moins un récipient (**1**) contenant des produits alimentaires, du type comportant :
- un fond (**2₁**) et un couvercle (**3**),
- une série de plateaux calorifugés amovibles (**2**), montés de manière superposée, entre le couvercle (**3**) et le fond (**2₁**), et maintenus entre eux à l'aide de moyens d'assemblage (**24a, 24b**), de manière à constituer un caisson calorifugé fermé,
- et au moins une source (**5**) de production d'un fluide froid ou chaud, communiquant avec l'intérieur du caisson,
caractérisé en ce que les plateaux calorifugés (**4**) sont équipés chacun de moyens (**7**) de support et de cent rage pour au moins un récipient (**1**), formés par au moins une alvéole délimitant une enceinte (**4**) et s'ouvrant sur les deux faces principales (**2a, 2b**) du plateau, pour communiquer avec le ou les enceintes du ou des plateaux voisins, de façon à permettre la circulation du fluide.

2. Conditionnement selon la revendication 1, caractérisé en ce que chaque plateau (**2**) comporte au moins un orifice (**13**) communiquant avec l'enceinte (**4**) et débouchant sur les deux faces principales du plateau, les orifices des plateaux étant alignés en position de superposition des plateaux, de manière à constituer un canal (**14**) formant avec les enceintes (**4**), le circuit de circulation du fluide.

3. Conditionnement selon la revendication 2, caractérisé en ce que chaque orifice (**13**) d'un plateau communique avec l'enceinte (**4**) correspondante à l'aide d'au moins un passage (**15**) débouchant en dessous et en dessus du plan (**P**) de support du récipient.

4. Conditionnement selon la revendication 1 ou 3, caractérisé en ce que les moyens (**7**) de support et de centrage comportent un épaulement (**11**) définissant le plan de support (**P**) du récipient.

5. Conditionnement selon la revendication 2, caractérisé en ce que chaque canal (**14**) est adapté pour recevoir une cartouche (**18**) de production d'un fluide froid et/ou chaud.

6. Conditionnement selon les revendications 1 et 5, caractérisé en ce que le couvercle (**3**) est pourvu d'au moins un orifice (**20**) aligné avec l'orifice (**13**) du plateau adjacent et équipé d'un connecteur (**19**) apte à raccorder la cartouche (**18**) à une tension électrique.

7. Conditionnement selon les revendications 1 et 6, caractérisé en ce le couvercle (**3**) est amovible et se trouve équipé d'une platine (**31**) de positionnement et de support d'un récipient (**1**), de manière à maintenir le récipient en position lors d'une opération d'enlèvement d'un film (**30**) de protection des produits alimentaires.

8. Conditionnement selon la revendication 1, caractérisé en ce que chaque plateau (**2**) est pourvu de moyens d'assemblage (**24a, 24b**), du type à emboîtement, ménagés sur les faces principales (**2a, 2b**) du plateau pour coopérer aves des moyens d'assemblage complémentaires équipant le ou les plateaux adjacents.

9. Conditionnement selon la revendication 1, caractérisé en ce que l'un des plateaux amovibles forme un plateau de fond (**2₁**) dans lequel au moins un trou borgne (**28**) est ménagé pour être aligné avec l'orifice (**13**) du plateau adjacent, de manière à recevoir partiellement la cartouche (**18**) assurant une fonction de cent rage des plateaux entre eux.

## Claims

1. Packaging for transporting at least one container (1) containing food products, of the type comprising:
- a bottom (2₁) and a lid (3),
- a set of removable heat-insulated trays (2), mounted in superimposed fashion, between the lid (3) and the bottom (2₁), and held together by assembly means (24a, 24b), so as to constitute a closed, heat-insulated box, and
- at least one source (5) producing a cold or hot fluid, which source communicates with the inside of the box,
characterized in that each one of the heat-insulated trays (4) is equipped with support and centering means (7) for at least one container (1), which means are formed by at least one recess defining an enclosure (4) and opening out onto the two main faces (2a, 2b) of the plate, in order to communicate with the enclosure or enclosures of the adjacent plate or plates and thus to allow the fluid to flow.

2. Packaging according to claim 1, characterized in that each plate (2) comprises at least one orifice (13) which communicates with the enclosure (4) and issues into the two main faces of the plate, the orifices of the plates being in alignment when the plates are in superposed position, so as to constitute a channel (14) which forms with the enclosures (4), the flowing circuit of the fluid.

3. Packaging according to claim 2, characterized in that each orifice (13) of a plate communicates with the corresponding enclosure (14) by means of at least one passage (15) issuing under and above the container support plane (P).

4. Packaging according to claim 1 or 3, characterized in that the support and centering means (7) comprise a shoulder piece (11) which defines the container support plane (P).

5. Packaging according to claim 2, characterized in that each channel (14) is adapted to receive a cartridge (18) producing a cold and/or hot fluid.

6. Packaging according to claims 1 and 5, characterized in that the lid (3) is provided with at least one orifice (20) in alignment with the orifice (13) of the adjacent plate and equipped with a connector (19) capable of connecting the cartridge (18) to an electric voltage unit.

7. Packaging according to claims 1 and 6, characterized in that the lid (3) is removable and is equipped with a plate (31) for positioning and supporting a container (1), so as to keep the container in position during an operation in which a film (30) protecting the food products is removed.

8. Packaging according to claim 1, characterized in that each plate (2) is provided with assembling means (24a, 24b), of the snap-fastening type, provided on the main faces (2a, 2b) of the plate so as to cooperate with complementary assembling means provided on the adjacent plate or plates.

9. Packaging according to claim 1, characterized in that one of the removable plates forms a bottom plate (2₁) in which at least one blind hole (28) is provided in such a way as to be in alignment with the orifice (13) of the adjacent plate, so as to partially receive the cartridge (18) and to ensure the function of centering the plates one with respect to the other.

## Patentansprüche

1. Transportbehälter zum Transport wenigstens eines Gefäßes (1) mit Lebensmitteln, der nachfolgende Charakteristika aufweist:
- einen Boden (2₁) und einen Deckel (3),
- eine Serie abnehmbarer, wärmeisolierender Paletten (2), die übereinanderliegend zwischen dem Deckel (3) und dem Boden (2₁) angebracht sind und von Verbindungselementen (24a, 24b) so zusammengehalten werden, daß ein wärmeisolierender, geschlossener Hohlraum entsteht,
- und wenigstens eine Quelle (5) zum Bereitstellen eines kalten oder warmen fluiden Mediums, das mit dem Inneren des Hohlraums in Verbindung steht,
dadurch gekennzeichnet, daß die wärmeisolierenden Paletten (2) jeweils mit Mitteln (7) zum stützen und Zentrieren für wenigstens ein Gefaß (1) versehen sind, wobei diese Mittel durch wenigstens eine, einen Bereich (4) begrenzende und sich zu den beiden Hauptseiten (2a, 2b) der Palette öffnende Ausnehmung gebildet werden, um mit dem benachbarten Bereich oder den benachbarten Bereichen so verbunden zu werden, daß eine Zirkulation des Fluids ermöglicht wird.

2. Transportgefäß nach Anspruch 1, dadurch gekennzeichnet, daß jede Palette (2) wenigstens eine Mündungsöffnung (13) aufweist, die mit dem Bereich (4) in Verbindung steht und in die beiden Hauptseiten der Palette mündet, wobei die Mündungsöffnungen der Paletten fluchtend in einer übereinanderliegenden Position der Paletten angebracht sind, daß dadurch ein Kanal (14) entsteht, der mit den Bereichen (4) den Zirkulationskreis des Fluids bildet.

3. Transportgefäß nach Anspruch 2, dadurch gekennzeichnet, daß jede Mündungsöffnung (13) einer Palette mit dem entsprechenden Bereich (4) durch wenigstens eine Durchgangsöffnung (15), die oberhalb und unterhalb der Stützebene (P) des Gefäßes mündet, in Verbindung steht.

4. Transportgefäß nach Anspruch 1 oder 3, dadurch gekennzeichnet, daß die Mittel (7) zum Stützen und Zentrieren einen Vorsprung (11) aufweisen, der die Stützebene (P) des Gefäßes definiert.

5. Transportgefäß nach Anspruch 2, dadurch gekennzeichnet, daß jeder Kanal (14) geeignet ausgebildet ist, um eine Patrone (18) zum Bereitstellen ein kalten und/oder warmen Fluids aufzunehmen.

6. Transportgefäß nach Ansprüchen 1 und 5, dadurch gekennzeichnet, daS der Deckel (3) mit wenigstens einer Mündungsöffnung (20) versehen ist, die mit der Mündungsöffnung (13) der angrenzenden Palette fluchtet und mit einem zum Anschließen der Patrone (18) an eine elektrische Spannung geeigneten Verbindungsstück (19) versehen ist.

7. Transportgefäß nach Ansprüchen 1 und 6, dadurch gekennzeichnet, daß der Deckel (3) abnehmbar und mit einem Gehäuse (31) zum Positionieren und Stützen eines Gefäßes (1) derart, daß das Gefäß während des Entfernen eines Films (30) zum Schutz der Lebensmittel festgehalten wird, versehen ist.

8. Transportgefäß nach Anspruch 1, dadurch gekennzeichnet, daß jede Palette (2) mit Verbindungselementen (24a, 24b) versehen ist, die ineinander greifen und auf den Hauptseiten (2a, 2b) der Palette angebracht sind, um mit den komplementären Verbindungselementen der angrenzenden Palette(n) zusammenzuwirken.

9. Transportgefäß nach Anspruch 1, dadurch gekennzeichnet, daß eine der abnehmbaren Paletten eine Bodenpalette (2₁) bildet, in der wenigstens ein Sackloch (28) angebracht ist, das so mit der Mündungsöffnung (13) der angrenzenden Palette fluchtet, daß die Patrone (13) teilweise davon aufgenommen wird, wobei eine Zentrierung der Platten untereinander sichergestellt wird.
